# FASCICULE DE BREVET EUROPEEN

(11) **EP 4 232 301 B1**
(45) Date de publication et mention de la délivrance du brevet: **25.12.2024**
(21) Numéro de dépôt: 21824421.8
(22) Date de dépôt: 21.10.2021
(51) Int. Cl.: B60B 39/00, B61C 15/08

(54) **DISPOSITIF ET PROCÉDÉ POUR OPTIMISER L'ADHÉRENCE D'UN PNEUMATIQUE EQUIPANT UN ENGIN MOBILE ROULANT SUR UNE VOIE, ET VÉHICULES AUTOMOBILES ET AÉRONEFS INTEGRANT UN TEL DISPOSITIF**
GERÄT ZUR OPTIMIERUNG DER HAFTUNG EINES EINES FAHRZEUGS AUSSTATTENDEN REIFENS, FAHRZEUG UND FLUGZEUG AUSGESTATTET MIT DERARTIGEM GERÄT
DEVICE AND METHOD FOR OPTIMISING THE ADHERENCE OF A TIRE EQUIPPING A VEHICLE ON A ROAD, LAND VEHICLE AND AIRCRAFT EQUIPPED WITH SAID DEVICE

(30) Priorité: 26.10.2020 FR 2010954
(43) Date de publication de la demande: 30.08.2023
(73) Titulaire: Dryside, 76000 Rouen (FR)
(72) Inventeur: ROGER, Jean-Baptiste, 76000 ROUEN (FR)
(74) Mandataire: IP Trust
(86) Numéro de dépôt international: PCT/FR2021/051848
(87) Numéro de publication internationale: WO 2022/090649

(56) Documents cités:
- WO-A1-2005/000604
- US-A1- 2014 188 363
- US-A1- 2016 339 487

## Description

### Domaine de l'invention

La présente invention concerne un dispositif pour optimiser l'adhérence d'un pneumatique équipant un engin mobile roulant sur une voie. Elle vise également un procédé d'optimisation d'adhérence mis en oeuvre dans ce dispositif, ainsi que des véhicules automobiles et aéronefs intégrant un tel dispositif.

Les voies de circulation concernées peuvent être des sols humides, des sols froids, enneigés ou verglacés ou tout autre variante dont l'élément perturbant présent sur la surface d'adhérence peut être vaporisé ou dévié. Les secteurs de transport visés incluent les secteurs automobiles ainsi que ceux de l'aéronautique civile et militaire ou tous secteurs mettant en oeuvre des véhicules roulants équipés de pneumatiques. Ledit dispositif a aussi un intérêt dans l'amélioration des performances d'un véhicule, notamment en compétition automobile et en recherche de performances.

### État de la technique antérieure

Il existe déjà des systèmes de sécurité tels que l'ABS, l'ESP ou l'AFU dans le cadre d'une phase de freinage. L'ABS, système d'antiblocage des roues, permet d'éviter le blocage des roues et de garder le contrôle de la direction en cas de freinage d'urgence. L'ESP, programme électronique de stabilité, est une aide à la conduite de correction de trajectoire en cas de perte d'adhérence. Enfin, l'AFU (pour Assistance au Freinage d'Urgence) est, tout comme l'ABS, particulièrement intéressant dans le cadre de l'invention. Cette assistance au freinage d'urgence détecte le passage anormalement rapide de la pédale d'accélérateur à la pédale de frein. À noter que ces aides à la conduite sont pratiquement absentes du monde de la compétition automobile.

Concernant les phases d'accélération, les techniques antérieures sont des procédés visant à réduire la puissance transmise aux roues afin de retrouver de l'adhérence, le Traction Control (TC) en est un exemple.

L'efficacité d'un freinage d'urgence ou d'une accélération franche sur route humide est, de manière non exhaustive, directement liée au pneumatique utilisé (type de gomme, usure, température, pression de gonflage), à la quantité d'eau présente sur le bitume et à sa température, à la puissance de freinage ou d'accélération souhaitée et au système électronique de contrôle d'adhérence.

Des procédés ont existé dans le but d'éliminer l'eau présente sur la chaussée en amont du pneumatique, notamment grâce à des jets d'air comprimé. Toutefois ces inventions n'ont pas vu le jour dans l'industrie automobile même si les résultats expérimentaux d'un système à air comprimé dépassaient 20% de réduction des distances de freinage jusqu'à 90 km/h. Ce système à air comprimé était déclenché par un comodo d'essuie-glace et embarquait des ventilateurs à courant continu logés dans les passages de roue.
Le document WO 2005/000604 A1 divulgue un dispositif antidérapant pour un véhicule. Ce dispositif peut former des irrégularités sur un revêtement de route gelé à l'aide d'un matériau actif qui n'est pas nuisible à l'environnement, y compris si le matériau actif reste sur le revêtement de route. Un moyen de chauffage fonctionnant avec une bobine de chauffage est installé dans un réservoir afin de stocker un liquide et le liquide chauffé est introduit par un tuyau de connexion et projeté sous une forme liquide ou nébulisée au moyen d'une pompe d'injection de façon que les irrégularités puissent se former sur le revêtement de route gelé. Une solution antigel, telle que de l'eau ou de l'alcool, est utilisée comme liquide.
Le document US 2016/339487 A1 divulgue un système de nettoyage de surface pour nettoyer cette surface des contaminants, comprenant un dispositif laser pour générer un faisceau laser de haute intensité, une optique de projection pour projeter ce faisceau sous la forme d'au moins un spot laser sur les contaminants, et un dispositif de commande pour déterminer une vitesse de déplacement longitudinal du système de nettoyage de surface et de la surface l'un par rapport à l'autre, et adapté pour commander le dispositif laser et l'optique de projection pour obtenir un motif de spots laser.

L'objectif de la présente invention est de contribuer à l'augmentation du coefficient d'adhérence d'un pneumatique équipant un engin mobile, en vaporisant, à l'aide d'un faisceau laser, l'élément limitant l'adhérence présent sur la chaussée, tant sur une phase de freinage que d'accélération.

### Exposé de l'invention

Cet objectif est atteint avec un dispositif pour optimiser l'adhérence d'un pneumatique équipant un engin mobile roulant sur une voie, ce dispositif étant selon la revendication 1 et étant embarqué dans ledit engin mobile et comprenant :
- des moyens pour détecter et caractériser la présence d'eau sur la voie à l'avant dudit engin mobile,
- des moyens pour traiter des informations reçues desdits moyens de détection et de caractérisation et pour générer des instructions de commande, et
- des moyens pour émettre un faisceau laser de puissance dirigé vers une portion de voie devant au moins une roue équipant ledit engin mobile, agencés pour vaporiser ou sublimer l'eau présente devant ladite au moins une roue en réponse à des instructions de commande.

Le dispositif selon l'invention vise ainsi à accroître les performances d'adhérence d'un pneumatique équipant un véhicule roulant sur sol humide, pendant des phases de freinage et d'accélération. Elle vise également les sols froids, enneigés ou verglacés ou tout autre variante dont l'élément perturbant présent sur la surface d'adhérence peut être vaporisé à l'aide d'un laser . Il est envisageable d'appliquer le dispositif aux secteurs automobile ainsi que dans l'aéronautique civile et militaire ou tout autre véhicule roulant.

Le dispositif d'optimisation d'adhérence a pour rôle principal d'augmenter le coefficient d'adhérence du pneumatique en vaporisant et/ou en déviant l'eau présente sur la chaussée, sous quelque état que ce soit. Toutefois, l'invention ne se limite pas seulement à l'eau (dans quelque état que ce soit) mais aussi à tout autre liquide susceptible d'être dévié ou vaporisé devant un pneumatique.

La présente invention a l'avantage d'augmenter l'adhérence sans réduire les performances durant l'accélération. Cet aspect est particulièrement intéressant dans le milieu de la compétition automobile ou de la recherche de performance.

Les moyens de traitement et de commande sont de préférence agencés pour traiter en outre des informations reçues d'au moins un système de sécurité de freinage équipant l'engin mobile.

Les moyens de détection et de caractérisation peuvent avantageusement comprendre une caméra présentant un champ de prise d'image dirigé vers une portion de voie à l'avant de l'engin mobile.

Ces moyens de détection et de caractérisation peuvent en outre comprendre des moyens pour mesurer ou estimer la température extérieure au voisinage de la voie.

Les moyens d'émission d'un faisceau laser peuvent comprennent un module optique laser disposé sous l'engin mobile et agencé de façon à projeter le faisceau laser sur une portion de voie devant une roue dudit engin.

Les moyens d'émission d'un faisceau laser peuvent en outre comprendre un module de source laser commandé par les moyens de traitement et de commande et relié au module optique par des moyens de fibre optique.

Dans un mode particulier de réalisation, le dispositif d'optimisation d'adhérence peut en outre comprendre des moyens pour refroidir le module de source laser. Ces moyens de refroidissement peuvent comprendre un circuit de liquide caloriporteur.

Le module optique laser peut être agencé pour balayer un faisceau laser sur la voie selon une trajectoire de balayage prédéterminée.

Le système de sécurité de freinage peut comprendre un système anti-blocage (ABS), un système de freinage d'urgence (AFU) ou un système de contrôle de stabilité électronique (ESP).

Les moyens de contrôle et de traitement peuvent être reliés à une unité de commande électronique (ECU) de l'engin.

Lorsque le dispositif d'optimisation d'adhérence selon l'invention est mis en oeuvre dans un engin comportant une caisse à laquelle les moyens d'émission du faisceau laser sont fixés, il peut en outre comprendre des moyens pour détecter un mouvement de la caisse et pour émettre des informations de détection à destination des moyens de contrôle et de traitement.

Suivant un autre aspect de l'invention, il est proposé un procédé selon la revendication 19 pour optimiser l'adhérence d'un pneumatique équipant un engin mobile roulant sur une voie, comprenant :
- une étape pour détecter et caractériser la présence d'eau sur la voie à l'avant dudit engin mobile,
- une étape pour émettre des informations de détection et de caractérisation de la présence d'eau sur la voie,
- une étape pour traiter lesdites informations de détection et de caractérisation pour générer des instructions de commande, et
- une étape pour émettre un faisceau laser de puissance dirigé vers une portion de voie devant au moins une roue équipant ledit engin mobile, de façon à vaporiser ou sublimer l'eau présente devant ladite au moins une roue en réponse à des instructions de commande.

Le procédé selon l'invention peut en outre comprendre une étape pour traiter des informations reçues d'au moins un système de sécurité de freinage équipant l'engin mobile.

L'étape de détection et de caractérisation peut mettre en oeuvre une caméra présentant un champ de prise d'image dirigé vers une portion de voie à l'avant de l'engin mobile.
L'étape de détection et de caractérisation peut en outre comprendre une mesure ou une estimation de la température extérieure au voisinage de la voie.

Suivant encore un autre aspect de l'invention, il est proposé un véhicule automobile intégrant un dispositif d'optimisation d'adhérence selon 'invention.

Suivant encore un autre aspect de l'invention, il est proposé un aéronef intégrant un dispositif d'optimisation d'adhérence selon 'invention. dont les moyens d'émission sont disposés sur ledit terrain d'atterrissage

Le dispositif d'optimisation d'adhérence a pour rôle principal d'augmenter le coefficient d'adhérence du pneumatique en vaporisant, à l'aide d'un faisceau laser, l'eau présente sur la chaussée, sous quelque état que ce soit. Toutefois, l'invention ne se limite pas seulement à l'eau.

L'eau peut se trouver sous différents états physiques: pluie, neige, glace; seul le coefficient d'absorption optique variera, l'énergie de vaporisation nécessaire est donc directement liée à l'état physique de l'eau à vaporiser. L'étude du coefficient d'absorption de l'eau (en cm⁻¹) détermine la longueur d'onde du laser à utiliser. La puissance sera, elle, fonction de la largeur du pneumatique, de la vitesse du véhicule, de la température ambiante et de la quantité d'eau présente sur la chaussée.

L'invention met en oeuvre une source laser, contrôlée électroniquement, de laquelle sort un faisceau laser transmis par fibre optique (faisceau de transmission) jusqu'à un module optique d'obtention du faisceau laser efficace. Les données nécessaires au déclenchement du système sont acquises par différents capteurs (caméras, thermomètres, ...) et par connexion à l'ECU ( Electronic Control Unit, système embarqué de contrôle des dispositifs physique au sein du véhicule) qui pourra fournir les informations de déclenchement des systèmes existants de contrôle d'adhérence et ainsi provoquer l'activation dudit dispositif.

Pour des raisons de sécurité, tout choc subi par la voiture doit absolument déconnecter ledit dispositif afin d'éviter tout risque pour les usagers environnants.

Dans une autre version de l'invention, la source laser peut être complétée d'un second système dédié à la déviation d'une partie de l'eau liquide. Ce système en tandem peut mettre en oeuvre une deuxième action à distance : jet d'air haute pression, jet d'air supersonique, canon à micro-ondes ou tout autre solution technique qui pourrait dévier à distance l'élément perturbant sur la route en amont du faisceau laser. Cette autre version peut tout aussi bien concerner des véhicules automobiles que des aéronefs.

L'intérêt du tandem déviation/ablation réside dans la possibilité de rendre le dispositif efficace dans des conditions plus rudes, notamment à des vitesses plus élevées et/ou si la quantité d'eau est importante.

Comme le dispositif d'optimisation d'adhérence selon l'invention génère de la chaleur, on peut prévoir un système de refroidissement performant afin de garantir des conditions de fonctionnement optimales. Ce système de refroidissement peut être indépendant du système de refroidissement du véhicule.

Le faisceau laser peut avoir différents effets, notamment celui de créer un plasma. Comme l'ablation laser instantanée de l'eau est énergivore, une alternative envisages à l'effet d'ablation est la création d'un plasma ayant pour but de dévier l'eau présente devant le pneumatique, ce à l'aide d'un faisceau laser. La création d'une onde de choc de déviation est aussi envisagée pour écarter l'eau du pneumatique.

### Description des figures

D'autres avantages et particularités de l'invention apparaîtront à la lecture de la description détaillée de mises en oeuvre et de modes de réalisation nullement imitatifs, et des dessins annexés suivants:
[Fig.1] la figure 1 est un schéma fonctionnel du dispositif applicable à n'importe quel véhicule roulant, dans une première version en mode d'ablation asservie.
[Fig.2] la figure 2 est un exemple d'application du dispositif à une automobile roulant sur route humide.
[Fig.3] la figure 3 est une courbe représentant le rapport entre la longueur d'onde (en m) d'un faisceau lumineux et l'absorption (en m⁻¹) de cette onde par l'eau.
[Fig.4] la figure 4 est un schéma fonctionnel d'une version particulière du dispositif d'optimisation d'adhérence selon l'invention, en mode tandem asservi, implémentant un système de déviation d'eau.

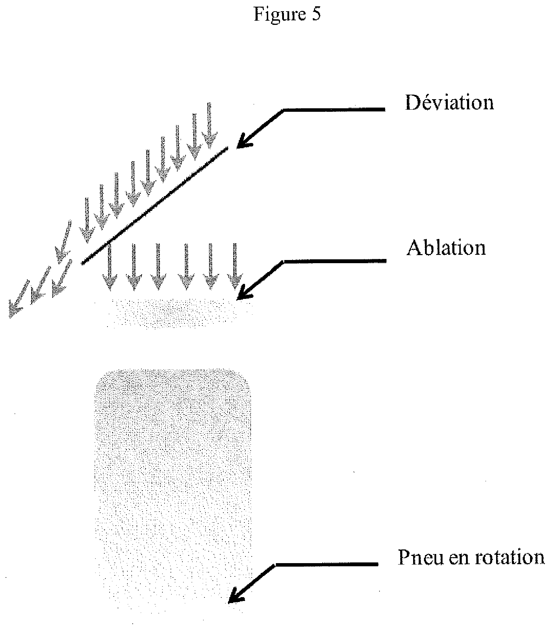

[Fig.5] la figure 5 illustre le mode de fonctionnement de la version du dispositif d'optimisation d'adhérence illustrée en Figure 4.

### Modes de réalisation détaillés

Ces modes de réalisation étant nullement limitatifs, on pourra notamment considérer des variantes de l'invention ne comprenant qu'une sélection de caractéristiques décrites ou illustrées par la suite isolées des autres caractéristiques décrites ou illustrées (même si cette sélection est isolée au sein d'une phase comprenant ces autres caractéristiques), si cette sélection de caractéristiques est suffisante pour conférer un avantage technique ou pour différencier l'invention par rapport à l'état de la technique antérieure. Cette sélection comprend au moins une caractéristique de préférence fonctionnelle sans détails structurels, et/ou avec seulement une partie des détails structurels si cette partie uniquement est suffisante pour conférer un avantage technique ou à différencier l'invention par rapport à l'état de la technique antérieure.

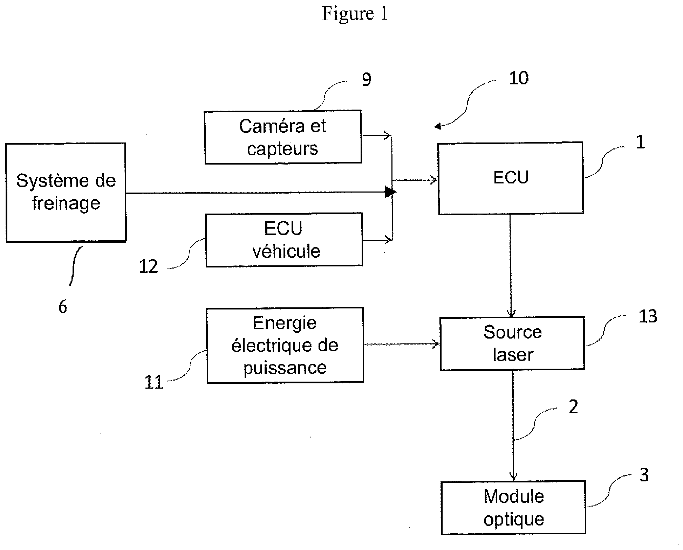

En référence à la figure 1, le dispositif d'optimisation d'adhérence 10 selon l'invention comprend une unité de contrôle et de traitement (ECU) 1 recevant en entrée des informations de détection de présence d'eau et de caractérisation de cette eau en provenance d'une caméra et de capteurs 9, des informations émises par l'unité de contrôle électronique (ECU) 12 du véhicule, et des informations sur les conditions de freinage émises par le système de freinage 6.

L'unité de contrôle et de traitement 1 commande un module de source laser 13 qui est alimenté par une unité d'énergie électrique de puissance 11. Ce module de source laser 13 émet un faisceau laser qui est transmis via une fibre optique 2 à un module optique 3 disposé dans le parechoc du véhicule ainsi équipé et prévu pour diriger un faisceau laser vers une portion de voie sur commande de l'unité de contrôle et de traitement 1.

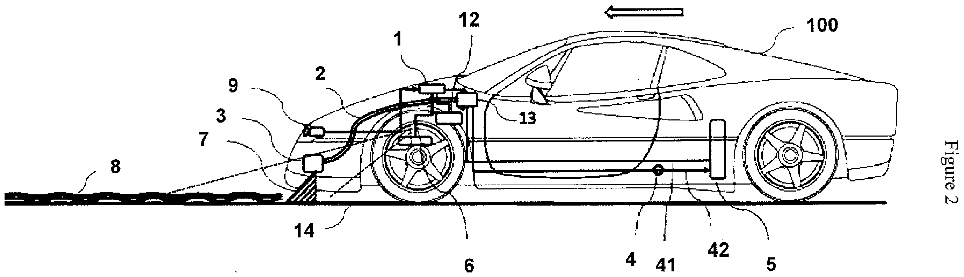

En référence à la Figure 2 et dans le cadre d'une application dudit dispositif à une automobile 100 et dans le but d'une optimisation du freinage, l'unité de contrôle électronique 1 peut avantageusement se trouver dans la baie moteur, les roues recevant le dispositif selon l'invention seront les roues avant. Le transfert du faisceau laser de transmission est réalisé par une fibre optique 2 jusqu'au parechoc où est logé le module optique 3 émetteur du faisceau efficace 7. Ce module optique 3 contient un bloc lentille.

Le module de source laser 13 est refroidi par un circuit caloriporteur incluant des conduits hydrauliques 41,42, une pompe hydraulique 4 et un radiateur de refroidissement ventilé 5.

Le faisceau laser efficace 7 peut prendre une forme variable : il peut ainsi être linéaire et parallèle au bord d'attaque du pneumatique ou bien angulé ou bien encore en forme de « V », de sinusoïde ou tout autre forme qui permettra d'optimiser son efficacité.

Ensuite, afin d'optimiser l'efficacité du faisceau laser au sol, la distance focale entre le bloc lentille et le sol doit rester dans une plage de tolérances faible. En effet, le dispositif selon l'invention peut inclure un asservissement de la distance focale en fonction des mouvements de caisses. Une phase de freinage entraînera un mouvement de piquet, l'avant du véhicule baissera de quelques centimètres; a-contrario, une phase d'accélération abaissera l'arrière du véhicule. Il est alors envisageable d'appréhender les mouvements de caisse afin d'avoir un faisceau utilisable dans sa plage d'efficacité.

Dès l'activation dudit dispositif d'optimisation d'adhérence 10, un courant de puissance devra être disponible très rapidement à partir d'une unité d'énergie électrique de puissance 11 embarquée dans le véhicule. Selon le type de véhicule, à moteur thermique, électrique ou hybride, une redirection du courant disponible pourra être effectuée depuis les fonctions annexes (ordinateur de bord, Hi-Fi, éléments de conforts) vers le dispositif de sécurité 10.

L'eau peut se trouver sous différents états physiques : pluie, neige, glace ; l'énergie de vaporisation nécessaire est donc directement liée à l'état physique de l'eau à vaporiser. L'étude du coefficient d'absorption de l'eau (en cm-1) détermine la longueur d'onde du laser à utiliser.

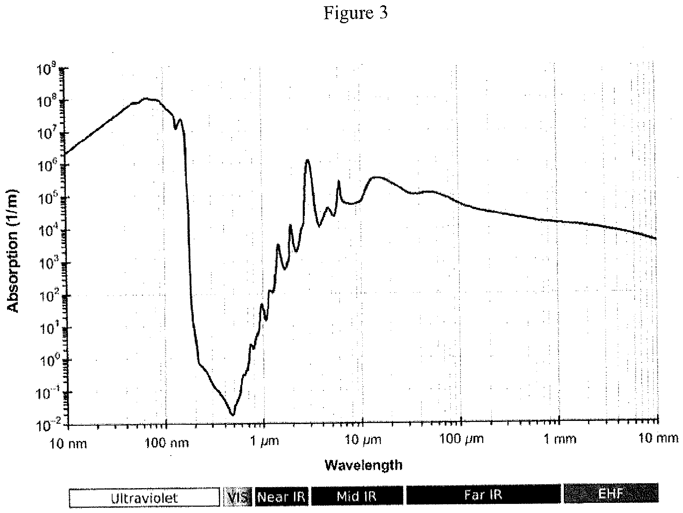

En référence à la figure 3 qui illustre le rapport entre la longueur d'onde d'une faisceau lumineux et l'absorption de cette onde par l'eau, il est possible d'affiner le choix de la technologie laser à employer. Le laser Erbium : YAG émet notamment un faisceau dont la longueur d'onde est de 2,9 µm, ce qui correspond à un pic d'absorption de l'eau, ce dans le domaine invisible des infrarouges. De plus, ce type de laser émet un faisceau pouvant être facilement transporté par fibre optique, ce qui est un avantage non négligeable pour l'embarquabilité du dispositif.

La puissance optique nécessaire sera, elle, fonction de la largeur du pneumatique, de la vitesse du véhicule, de la température ambiante et de la quantité d'eau présente sur la chaussée.

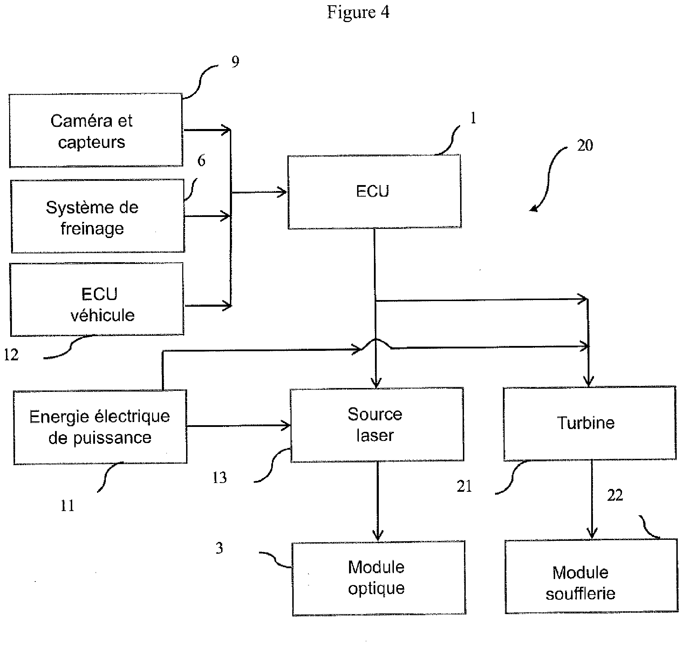

Dans un second mode de réalisation illustré par les figures 3 et 4, le dispositif d'optimisation d'adhérence 20 comprend, en plus de l'ensemble des composants du premier mode de réalisation qui vient d'être décrit en référence aux figures 1 et 2, une turbine 21 commandée par l'unité de contrôle et de traitement (ECU) 1 et alimentée par l'unité d'énergie électrique 11, et un module de soufflerie 22 disposé au sein du véhicule de façon à pouvoir dévier une partie de l'eau présente devant un pneumatique équipant ce véhicule, cet effet de déviation étant combiné à un effet d'ablation de l'eau présente devant ce pneumatique en rotation.

Bien sûr la présente invention n'est pas limitée aux modes de réalisation qui viennent d'être décrits et de nombreux autres modes de réalisation peuvent être envisagés sans sortir du cadre de la présente invention. En particulier, les différents composants du dispositif d'optimisation d'adhérence équipant un véhicule automobile peuvent être disposés à d'autres emplacements que ceux décrits dans la figure 2.

## Revendications

1. Dispositif (10) pour optimiser l'adhérence d'un pneumatique équipant un engin mobile (100) pourvu d'une caisse et roulant sur une voie (14), ce dispositif (10) étant embarqué dans ledit engin mobile (100) et comprenant :
- des moyens (9) pour détecter et caractériser la présence d'un liquide (8) sur la voie (14) à l'avant dudit engin mobile (100),
- des moyens (1) pour traiter des informations reçues desdits moyens de détection et de caractérisation (9) et pour générer des instructions de commande,
**caractérisé en ce qu'**il comprend en outre :
- des moyens (3,13) pour émettre avec une distance focale un faisceau laser de puissance (7) dirigé vers une portion de voie devant au moins un pneumatique équipant ledit engin mobile (100), lesdits moyens d'émission laser étant fixés à la caisse de l'engin mobile et étant agencés pour vaporiser ou sublimer l'eau présente devant ledit au moins un pneumatique en réponse à des instructions de commande, et
- des moyens pour détecter un mouvement de la caisse et pour émettre des informations de détection à destination des moyens de traitement et de commande, de façon à procurer un asservissement de la distance focale des moyens d'émission laser en fonction des mouvements de la caisse.

2. Dispositif d'optimisation d'adhérence (10) selon la revendication précédente, **caractérisé en ce que** les moyens de traitement et de commande (1) sont agencés pour traiter en outre des informations reçues d'au moins un système (6) de sécurité de freinage équipant l'engin mobile (100).

3. Dispositif d'optimisation d'adhérence (10) selon la revendication précédente, **caractérisé en ce que** les moyens de détection et de caractérisation (9) comprennent une caméra présentant un champ de prise d'image dirigée vers une portion de voie à l'avant de l'engin mobile (100).

4. Dispositif d'optimisation d'adhérence (10) selon la revendication précédente, **caractérisé en ce que** les moyens de détection et de caractérisation comprennent en outre des moyens pour mesurer ou estimer la température extérieure au voisinage de la voie.

5. Dispositif d'optimisation d'adhérence (10) selon l'une quelconque des revendications précédentes, **caractérisé en ce que** les moyens (3,13) d'émission d'un faisceau laser comprennent un module optique laser (3) disposé sous l'engin mobile (100) et agencé de façon à projeter le faisceau laser sur une portion de voie devant un pneumatique dudit engin mobile (100).

6. Dispositif d'optimisation d'adhérence (10) selon la revendication précédente, **caractérisé en ce que** les moyens d'émission d'un faisceau laser (3,13) comprennent en outre une module de source laser (13) commandé par les moyens de traitement et de commande (1) et relié au module optique (3) par des moyens de fibre optique (2).

7. Dispositif d'optimisation d'adhérence (10) selon l'une quelconque des quatre revendications précédentes, **caractérisé en ce que** le module optique laser (3) est agencé pour balayer un faisceau laser sur la voie selon une trajectoire de balayage prédéterminée.

8. Dispositif d'optimisation d'adhérence (10) selon l'une quelconque des revendications 2 à 7 **caractérisé en ce que** le système de sécurité de freinage (6) comprend un système anti-blocage (ABS).

9. Dispositif d'optimisation d'adhérence (10) selon la revendication 8, **caractérisé en ce que** le système de sécurité de freinage (6) comprend en outre un système de freinage d'urgence (AFU).

10. Dispositif d'optimisation d'adhérence (10) selon l'une quelconque des revendications 8 à 9, **caractérisé en ce que** le système de sécurité de freinage (6) comprend en outre un système de contrôle de stabilité électronique (ESP).

11. Dispositif d'optimisation d'adhérence (10) selon l'une quelconque des revendications précédentes, **caractérisé en ce que** les moyens de contrôle et de traitement (1) sont reliés à une unité de commande électronique (ECU) (12) de l'engin mobile (100).

12. Dispositif d'optimisation d'adhérence (20) selon l'une quelconque des revendications précédentes, **caractérisé en ce qu'**il comprend en outre des moyens (21,22) pour dévier au moins une partie de l'eau liquide située devant le au moins un pneumatique.

13. Dispositif d'optimisation d'adhérence selon la revendication précédente, **caractérisé en ce que** les moyens de déviation comprennent une turbine (21) commandée par les moyens de traitement et de commande (1) et alimentée par une unité d'énergie électrique (11), et un module de soufflerie (22) disposé au sein du véhicule.

14. Dispositif d'optimisation d'adhérence selon l'une des revendications 6, 12 ou 13, **caractérisé en ce qu'**il comprend en outre des moyens (4,5,41,42) pour refroidir le module de source laser (13) et/ou les moyens de déviation.

15. Dispositif d'optimisation d'adhérence selon la revendication précédente, **caractérisé en ce que** les moyens de refroidissement comprennent un circuit de liquide caloriporteur (41,42).

16. Dispositif d'optimisation d'adhérence selon l'une des deux revendications précédentes, **caractérisé en ce que** les moyens de refroidissement dudit dispositif sont indépendants du système de refroidissement de l'engin mobile.

17. Dispositif d'optimisation d'adhérence selon l'une quelconque des revendications précédentes, **caractérisé en ce que** les moyens d'émission d'un faisceau laser sont en outre agencés pour créer un plasma prévu pour dévier au moins une partie de l'eau présente devant le au moins un pneumatique.

18. Dispositif d'optimisation d'adhérence selon la revendication précédente, **caractérisé en ce que** les moyens d'émission d'un faisceau laser sont en outre agencés pour créer une onde de choc de déviation.

19. Procédé pour optimiser l'adhérence d'un pneumatique équipant un engin mobile (100) pourvu d'une caisse et roulant sur une voie (14), mis en oeuvre dans un dispositif d'optimisation d'adhérence selon l'une quelconque des revendications précédentes, ce procédé comprenant :
- une étape pour détecter et caractériser la présence d'eau (8) sur la voie (14) à l'avant dudit engin mobile (100),
- une étape pour émettre des informations de détection et de caractérisation de la présence d'eau (8) sur la voie (14),
- une étape pour traiter lesdites informations de détection et de caractérisation pour générer des instructions de commande,
**caractérisé en ce qu'**il comprend en outre :
- une étape pour émettre depuis la caisse, avec une distance focale, un faisceau laser de puissance (7) dirigé vers une portion de voie devant au moins un pneumatique équipant ledit engin mobile (100), de façon à vaporiser ou sublimer l'eau présente devant ledit au moins un pneumatique en réponse à des instructions de commande,
- une étape pour détecter un mouvement de la caisse et pour émettre des informations de détection de mouvement de caisse prévues pour être traitées avec les informations de détection de présence d'eau, de façon à procurer un asservissement de la distance focale des moyens d'émission laser en fonction des mouvements de la caisse.

20. Procédé selon la revendication précédente, **caractérisé en ce qu'**il comprend en outre une étape pour traiter des informations reçues d'au moins un système de sécurité de freinage (6) équipant l'engin mobile.

21. Procédé selon l'une des deux revendications précédentes, **caractérisé en ce que** l'étape de détection et de caractérisation met en oeuvre une caméra (9) présentant un champ de prise d'image dirigée vers une portion de voie à l'avant de l'engin mobile (100).

22. Procédé selon la revendication précédente, **caractérisé en ce que** l'étape de détection et de caractérisation comprend en outre une mesure ou une estimation de la température extérieure au voisinage de la voie.

23. Véhicule automobile (100) intégrant un dispositif d'optimisation d'adhérence (10) selon l'une quelconque des revendications 1 à 18.

24. Véhicule automobile selon la revendication précédente, **caractérisé en ce qu'**il comprend en outre des moyens pour dévier au moins une partie de l'eau liquide située devant le au moins un pneumatique.

25. Aéronef intégrant un dispositif d'optimisation d'adhérence selon l'une quelconque des revendications 1 à 18, dont les moyens d'émission sont disposés sur le train d'atterrissage.

26. Aéronef selon la revendication précédente, **caractérisé en ce qu'**il comprend en outre des moyens pour dévier au moins une partie de l'eau liquide située devant le au moins un pneumatique.

## Patentansprüche

1. Vorrichtung (10) zum Optimieren des Kraftschlusses eines Luftreifens, der in eine bewegbare Maschine (100) eingebaut ist, die mit einer Karosserie versehen ist und auf einer Strecke (14) fährt, wobei diese Vorrichtung (10) in die bewegbare Maschine (100) eingebettet ist und umfasst:
- Mittel (9) zum Erkennen und Kennzeichnen des Vorhandenseins einer Flüssigkeit (8) auf der Strecke (14) an der Vorderseite der bewegbaren Maschine (100),
- Mittel (1) zum Verarbeiten von Informationen, die von den Erkennungs- und Kennzeichnungsmitteln (9) empfangen werden, und zum Erzeugen von Steueranweisungen,
**dadurch gekennzeichnet, dass** sie ferner umfasst:
- Mittel (3, 13) zum Emittieren eines leistungsstarken Laserstrahls (7) mit einer Brennweite, der auf einen Abschnitt der Strecke vor mindestens einem Luftreifen gerichtet ist, der in die bewegbare Maschine (100) eingebaut ist, wobei die Laseremissionsmittel an der Karosserie der bewegbaren Maschine befestigt sind und zum Verdunstenlassen oder Sublimieren des Wassers, das vor dem mindestens einen Luftreifen vorhanden ist, als Reaktion auf Steueranweisungen angeordnet sind, und
- Mittel zum Erkennen einer Bewegung der Karosserie und zum Emittieren von Erkennungsinformationen an die Verarbeitungs- und Steuermittel, um eine Regelung der Brennweite der Laseremissionsmittel in Abhängigkeit von den Bewegungen der Karosserie bereitzustellen.

2. Kraftschlussoptimierungsvorrichtung (10) nach dem vorstehenden Anspruch, **dadurch gekennzeichnet, dass** die Verarbeitungs- und Steuermittel (1) zum weiteren Verarbeiten von Informationen angeordnet sind, die von mindestens einem Bremssicherheitssystem (6) empfangen werden, das in die bewegbare Maschine (100) eingebaut ist.

3. Kraftschlussoptimierungsvorrichtung (10) nach dem vorstehenden Anspruch, **dadurch gekennzeichnet, dass** die Erkennungs- und Kennzeichnungsmittel (9) eine Kamera umfassen, die ein Bildaufnahmefeld aufweist, das auf einen Abschnitt der Strecke an der Vorderseite der bewegbaren Maschine (100) gerichtet ist.

4. Kraftschlussoptimierungsvorrichtung (10) nach dem vorstehenden Anspruch, **dadurch gekennzeichnet, dass** die Erkennungs- und Kennzeichnungsmittel ferner Mittel zum Messen oder Schätzen der Außentemperatur in der Nähe der Strecke umfassen.

5. Kraftschlussoptimierungsvorrichtung (10) nach einem der vorstehenden Ansprüche, **dadurch gekennzeichnet, dass** die Laserstrahlemissionsmittel (3, 13) ein optisches Lasermodul (3) umfassen, das unter der bewegbaren Maschine (100) eingerichtet ist und angeordnet ist, um den Laserstrahl auf einen Abschnitt der Strecke vor einem Luftreifen der bewegbaren Maschine (100) zu projizieren.

6. Kraftschlussoptimierungsvorrichtung (10) nach dem vorstehenden Anspruch, **dadurch gekennzeichnet, dass** die Laserstrahlemissionsmittel (3, 13) ferner ein Laserquellenmodul (13) umfassen, das durch die Verarbeitungs- und Steuermittel (1) gesteuert wird und über Lichtleitmittel (2) mit dem optischen Modul (3) verbunden ist.

7. Kraftschlussoptimierungsvorrichtung (10) nach einem der vier vorstehenden Ansprüche, **dadurch gekennzeichnet, dass** das optische Lasermodul (3) zum Abtasten eines Laserstrahls auf der Strecke entlang eines zuvor bestimmten Abtastpfads angeordnet ist.

8. Kraftschlussoptimierungsvorrichtung (10) nach einem der Ansprüche 2 bis 7, **dadurch gekennzeichnet, dass** das Bremssicherheitssystem (6) ein Antiblockiersystem (ABS) umfasst.

9. Kraftschlussoptimierungsvorrichtung (10) nach Anspruch 8,
**dadurch gekennzeichnet, dass** das Bremssicherheitssystem (6) ferner ein Notbremssystem (AFU) umfasst.

10. Kraftschlussoptimierungsvorrichtung (10) nach einem der Ansprüche 8 bis 9, **dadurch gekennzeichnet, dass** das Bremssicherheitssystem (6) ferner ein elektronisches Stabilitätskontrollsystem (ESP) umfasst.

11. Kraftschlussoptimierungsvorrichtung (10) nach einem der vorstehenden Ansprüche, **dadurch gekennzeichnet, dass** die Kontroll- und Verarbeitungsmittel (1) mit einer elektronischen Steuereinheit (ECU) (12) der bewegbaren Maschine (100) verbunden sind.

12. Kraftschlussoptimierungsvorrichtung (20) nach einem der vorstehenden Ansprüche, **dadurch gekennzeichnet, dass** sie ferner Mittel (21, 22) zum Ablenken mindestens eines Teils des flüssigen Wassers umfasst, das sich vor dem mindestens einen Luftreifen befindet.

13. Kraftschlussoptimierungsvorrichtung nach dem vorstehenden Anspruch, **dadurch gekennzeichnet, dass** die Ablenkmittel eine Turbine (21), die durch die Verarbeitung- und Steuermittel (1) gesteuert wird und durch eine elektrische Energieeinheit (11) angetrieben wird, und ein Gebläsemodul (22) umfassen, das innerhalb des Fahrzeugs eingerichtet ist.

14. Kraftschlussoptimierungsvorrichtung nach einem der Ansprüche 6, 12 oder 13, **dadurch gekennzeichnet, dass** sie ferner Mittel (4, 5, 41, 42) zum Kühlen des Laserquellenmoduls (13) und/oder der Ablenkmittel umfasst.

15. Kraftschlussoptimierungsvorrichtung nach dem vorstehenden Anspruch, **dadurch gekennzeichnet, dass** die Kühlmittel einen Wärmeübertragungsflüssigkeitskreislauf (41, 42) umfassen.

16. Kraftschlussoptimierungsvorrichtung nach einem der zwei vorstehenden Ansprüche, **dadurch gekennzeichnet, dass** die Kühlmittel der Vorrichtung unabhängig von dem Kühlsystem der bewegbaren Maschine sind.

17. Kraftschlussoptimierungsvorrichtung nach einem der vorstehenden Ansprüche, **dadurch gekennzeichnet, dass** die Laserstrahlemissionsmittel ferner zum Erzeugen eines Plasmas angeordnet sind, das vorgesehen ist, um mindestens einen Teil des Wassers abzulenken, das vor dem mindestens einen Luftreifen vorhanden ist.

18. Kraftschlussoptimierungsvorrichtung nach dem vorstehenden Anspruch, **dadurch gekennzeichnet, dass** die Laserstrahlemissionsmittel ferner zum Generieren einer Ablenkungsstoßwelle angeordnet sind.

19. Verfahren zum Optimieren des Kraftschlusses eines Luftreifens, der in eine bewegbare Maschine (100) eingebaut ist, die mit einer Karosserie versehen ist und auf einer Strecke (14) fährt, das in einer Kraftschlussoptimierungsvorrichtung nach einem der vorstehenden Ansprüche implementiert wird, dieses Verfahren umfassend:
- einen Schritt zum Erkennen und Kennzeichnen des Vorhandenseins von Wasser (8) auf der Strecke (14) an der Vorderseite der bewegbaren Maschine (100),
- einen Schritt zum Emittieren von Informationen zum Erkennen und Kennzeichnen des Vorhandenseins von Wasser (8) auf der Strecke (14),
- einen Schritt zum Verarbeiten der Erkennungs- und Kennzeichnungsinformationen zum Erzeugen von Steueranweisungen,
**dadurch gekennzeichnet, dass** es ferner umfasst:
- einen Schritt zum Emittieren eines leistungsstarken Laserstrahls (7) mit einer Brennweite von der Karosserie, der auf einen Abschnitt der Strecke vor mindestens einem Luftreifen gerichtet ist, das in die bewegbare Maschine (100) eingebaut ist, um das Wasser, das vor dem mindestens einen Luftreifen vorhanden ist, als Reaktion auf Steueranweisungen verdampfen zu lassen oder zu sublimieren,
- einen Schritt zum Erkennen einer Bewegung der Karosserie und zum Emittieren von Informationen zum Erkennen der Karosseriebewegung, die vorgesehen sind, um mit den Informationen zum Erkennen des Vorhandenseins von Wasser verarbeitet zu werden, um eine Regelung der Brennweite der Laseremissionsmittel in Abhängigkeit von den Bewegungen der Karosserie bereitzustellen.

20. Verfahren nach dem vorstehenden Anspruch,
**dadurch gekennzeichnet, dass** es ferner einen Schritt zum Verarbeiten von Informationen umfasst, die von mindestens einem Bremssicherheitssystem (6) empfangen werden, das in die bewegbare Maschine eingebaut ist.

21. Verfahren nach einem der zwei vorstehenden Ansprüche,
**dadurch gekennzeichnet, dass** der Erkennungs- und Kennzeichnungsschritt eine Kamera (9) implementiert, die ein Bildaufnahmefeld aufweist, das auf einen Abschnitt der Strecke an der Vorderseite der bewegbaren Maschine (100) gerichtet ist.

22. Verfahren nach dem vorstehenden Anspruch,
**dadurch gekennzeichnet, dass** der Erkennungs- und Kennzeichnungsschritt ferner eine Messung oder Schätzung der Außentemperatur in der Nähe der Strecke umfasst.

23. Kraftfahrzeug (100), das eine Kraftschlussoptimierungsvorrichtung (10) nach einem der Ansprüche 1 bis 18 integriert.

24. Kraftfahrzeug nach dem vorstehenden Anspruch,
**dadurch gekennzeichnet, dass** es ferner Mittel zum Ablenken mindestens eines Teils des flüssigen Wassers umfasst, das sich vor dem mindestens einen Luftreifen befindet.

25. Luftfahrzeug, das eine Kraftschlussoptimierungsvorrichtung nach einem der Ansprüche 1 bis 18 integriert, deren Emissionsmittel an dem Fahrwerk eingerichtet sind.

26. Luftfahrzeug nach dem vorstehenden Anspruch,
**dadurch gekennzeichnet, dass** es ferner Mittel zum Ablenken mindestens eines Teils des flüssigen Wassers umfasst, das sich vor dem mindestens einen Luftreifen befindet.

## Claims

1. Device (10) for optimizing the grip of a tire fitted to a mobile vehicle (100) which is provided with a body and traveling on a road surface (14), this device (10) being on board said mobile vehicle (100) and comprising:
- means (9) for detecting and characterizing the presence of a liquid (8) on the road surface (14) in front of said mobile vehicle (100),
- means (1) for processing information received from said detection and characterization means (9) and for generating control instructions,
**characterized in that** it further comprises:
- means (3, 13) for emitting a power laser beam (7), with a focal distance, directed toward a portion of road surface in front of at least one tire fitted to said mobile vehicle (100), said laser emitting means being secured to the body of the mobile vehicle and being designed to vaporize or sublimate the water present in front of said at least one tire in response to control instructions, and
- means for detecting a movement of the body and for transmitting detection information to the processing and control means, so as to provide automatic control of the focal distance of the laser emitting means as a function of the movements of the body.

2. Grip optimization device (10) according to the preceding claim,
**characterized in that** the processing and control means (1) are arranged to further process information received from at least one braking safety system (6) fitted to the mobile vehicle (100).

3. Grip optimization device (10) according to the preceding claim,
**characterized in that** the detection and characterization means (9) comprise a camera having an image-capture field directed toward a portion of road surface in front of the mobile vehicle (100).

4. Grip optimization device (10) according to the preceding claim,
**characterized in that** the detection and characterization means further comprise means for measuring or estimating the external temperature in the vicinity of the road surface.

5. Grip optimization device (10) according to any one of the preceding claims, **characterized in that** the means (3, 13) for emitting a laser beam comprise an optical laser module (3) positioned under the mobile vehicle (100) and arranged so as to project the laser beam onto a portion of road surface in front of a tire of said mobile vehicle (100).

6. Grip optimization device (10) according to the preceding claim, **characterized in that** the means for emitting a laser beam (3, 13) further comprise a laser source module (13) controlled by the processing and control means (1) and connected to the optical module (3) via optical fiber means (2).

7. Grip optimization device (10) according to any one of the four preceding claims, **characterized in that** the optical laser module (3) is arranged to scan a laser beam over the road surface according to a predetermined scanning trajectory.

8. Grip optimization device (10) according to any one of claims 2 to 7, **characterized in that** the braking safety system (6) comprises an anti-lock braking system (ABS).

9. Grip optimization device (10) according to claim 8, **characterized in that** the braking safety system (6) further comprises an emergency braking system (EBA).

10. Grip optimization device (10) according to any one of claims 8 to 9, **characterized in that** the braking safety system (6) further comprises an electronic stability control system (ESP).

11. Grip optimization device (10) according to any one of the preceding claims, **characterized in that** the control and processing means (1) are connected to an electronic control unit (ECU) (12) of the mobile vehicle (100).

12. Grip optimization device (20) according to any one of the preceding claims, **characterized in that** it further comprises means (21, 22) for diverting at least a portion of the liquid water located in front of the at least one tire.

13. Grip optimization device according to the preceding claim,
**characterized in that** the diversion means comprise a turbine (21) controlled by the processing and control means (1) and powered by an electrical energy unit (11), and a blower module (22) positioned within the vehicle.

14. Grip optimization device according to one of claims 6, 12 or 13,
**characterized in that** it further comprises means (4, 5, 41, 42) for cooling the laser source module (13) and/or the diversion means.

15. Grip optimization device according to the preceding claim,
**characterized in that** the cooling means comprise a heat transfer fluid circuit (41, 42).

16. Grip optimization device according to one of the two preceding claims, **characterized in that** the cooling means of said device are independent of the cooling system of the mobile vehicle.

17. Grip optimization device according to any one of the preceding claims, **characterized in that** the means for emitting a laser beam are further arranged to create a plasma intended to divert at least a portion of the water present in front of the at least one tire.

18. Grip optimization device according to the preceding claim,
**characterized in that** the means for emitting a laser beam are further arranged to create a diversion shock wave.

19. Method for optimizing the grip of a tire fitted to a mobile vehicle (100) which is provided with a body and traveling on a road surface (14), implemented in a grip optimization device according to any one of the preceding claims, this method comprising:
- a step for detecting and characterizing the presence of water (8) on the road surface (14) in front of said mobile vehicle (100),
- a step for transmitting information for detecting and characterizing the presence of water (8) on the road surface (14),
- a step for processing said detection and characterization information to generate control instructions,
**characterized in that** it further comprises:
- a step for emitting from the body, with a focal distance, a power laser beam (7) directed toward a portion of road surface in front of at least one tire fitted to said mobile vehicle (100), so as to vaporize or sublimate the water present in front of said at least one tire in response to control instructions,
- a step for detecting a movement of the body and for transmitting body movement detection information to be processed with the water presence detection information, so as to provide automatic control of the focal distance of the laser emitting means as a function of movements of the body.

20. Method according to the preceding claim, **characterized in that** it further comprises a step for processing information received from at least one braking safety system (6) fitted to the mobile vehicle.

21. Method according to one of the two preceding claims, **characterized in that** the detection and characterization step uses a camera (9) having an image-capture field directed toward a portion of road surface in front of the mobile vehicle (100).

22. Method according to the preceding claim, **characterized in that** the detection and characterization step further comprises a measurement or an estimation of the external temperature in the vicinity of the road surface.

23. Motor vehicle (100) incorporating a grip optimization device (10) according to any one of claims 1 to 18.

24. Motor vehicle according to the preceding claim, **characterized in that** it further comprises means for diverting at least a portion of the liquid water located in front of the at least one tire.

25. Aircraft incorporating a grip optimization device according to any one of claims 1 to 18, the emitting means of which are positioned on the landing gear.

26. Aircraft according to the preceding claim, **characterized in that** it further comprises means for diverting at least a portion of the liquid water located in front of the at least one tire.
